# EUROPEAN PATENT APPLICATION

(11) **EP 4 745 021 A1**
(43) Date of publication of application: **20.05.2026**
(21) Application number: 25215407.5
(22) Date of filing: 12.11.2025
(51) Int. Cl.: B63B 34/22

(54) **HIGH-PRESSURE NARROW-TYPE BOTTOM WEIGHTED BOAT**

(30) Priority: 16.11.2024 CN 202411638368
(71) Applicant: Chengdu Drifting Island Outdoor Co., Ltd, Sichuan Province (CN)
(72) Inventor: WANG, Dai, Chengdu (CN); LUO, Yan, Chengdu (CN)
(74) Representative: Bayramoglu et al.

(57) **Abstract**

The present disclosure provides an inflatable white water kayak (hereinafter referred to as the kayak) with a narrow hull and a U-shaped bottom, which is a high-pressure narrow-type bottom weighted boat, and belongs to the field of portable packrafts. The high-pressure narrow-type bottom weighted boat includes an inflatable and deflatable tubular body, where the tubular body includes a bow, a middle segment, and a stem; the bow, the middle segment and the stern are connected sequentially; the middle segment includes a bottom plate and two side tubes; the two side tubes are symmetrically disposed at two sides of the bottom plate; the bottom plate and the two side tubes define a central seating area; the side tube includes at least two sidewall subtube portions; for the single side tube, the sidewall subtube portions are connected sequentially along a vertical direction to form a whole; a section of the side tube along a direction perpendicular to a central axial direction of the side tube is elliptical or quasi-elliptical; the side tube is combined with the bottom plate; and a section of the middle segment along the vertical direction is quasi-U-shaped.

## Description

### TECHNICAL FIELD

The present disclosure relates to the field of portable packrafts, and in particular to a high-pressure narrow-type bottom weighted boat. More particularly, the present disclosure provides an inflatable kayak, especially an inflatable whitewater kayak. The present disclosure has a product code of MRS Killer Whale, and can realize an Eskimo roll reliably.

### BACKGROUND TECHNOLOGY

Modern kayaks are developed from conventional Eskimo hunting boats that are made by stretching animal skins over wooden frames. As a type of canoe, kayaks are rowed with a double-bladed paddle at a low seated posture. An Eskimo roll is a self-rescue method in capsizing when the Eskimos row the kayaks for hunting.

For paddlers of modern rigid whitewater kayaks, the Eskimo roll technique is the best self-rescue method when the kayaks capsize accidentally. Those skilled in this technique can directly right capsized kayaks to a normal state in whitewater through an underwater maneuver, preventing separation from the kayaks (in case of the separation from the kayaks in the whitewater, the paddlers may suffer from quickly drowning). The mature application of the Eskimo roll technique greatly ensures safety of the paddlers in whitewater, and this technique must be mastered by experienced paddlers.

For rigid whitewater kayaks, based on the shape of the kayaks, a reliable Eskimo roll can be realized. However, for existing inflatable kayaks such as packrafts, users mastering the Eskimo roll technique can hardly realize the Eskimo roll, and cannot turn the kayaks upward successfully at the critical time. In view of this, the present disclosure provides a high-pressure narrow-type bottom weighted boat to help the users realize the Eskimo roll more reliably.

### CONTENT OF THE INVENTION

An objective of the present disclosure is to provide a novel inflatable whitewater kayak, to improve agility and secondary stability of the whitewater kayak, and realize the Eskimo roll at high reliability.

To achieve the above objective, the present disclosure adopts the following technical solutions:

The present disclosure provides a high-pressure narrow-type bottom weighted boat, including an inflatable and deflatable tubular body, where the tubular body includes a bow, a middle segment, and a stern; the bow, the middle segment and the stern are connected sequentially; the middle segment includes a bottom plate and two side tubes; the two side tubes are symmetrically disposed at two sides of the bottom plate; and the bottom plate and the two side tubes define a central seating area;
the side tube includes at least two sidewall subtube portions; for the single side tube, the sidewall subtube portions are connected sequentially along a vertical direction to form a whole; and a section of the side tube along a direction perpendicular to a central axial direction of the side tube is elliptical or quasi-elliptical; and
the side tube is combined with the bottom plate; and a section of the middle segment along the vertical direction is quasi-U-shaped.

The section of the side tube along the direction perpendicular to the central axial direction of the side tube is rugby-ball-shaped.

A height of the side tube is greater than a width of the side tube.

The bottom plate is made of a flexible material.

A section of each of the sidewall subtube portions is circular, elliptical or quasi-elliptical.

An existing cylindrical side tube is changed into the side tube with the elliptical or quasi-elliptical section.

By disposing a pull strip in the side tube, the side tube is shaped as an ellipse or quasi-ellipse.

The side tube includes a first subtube outer wall and at least one first subtube pull strip; the at least one first subtube pull strip is disposed in the first subtube outer wall; and the sidewall subtube portion is formed between the first subtube pull strip and an inner side of the first subtube outer wall, as well as between two adjacent first subtube pull strips and the inner side of the first subtube outer wall; and alternatively,
the side tube includes at least two sidewall subtube portions independent of each other; and two adjacent sidewall subtube portions are connected sequentially along the vertical direction by gluing or sewing to form a whole.

There are 2-9 first subtube pull strips.

The side tube includes 3-10 sidewall subtube portions that are connected sequentially along the vertical direction to form a whole.

A width of the central seating area is slightly greater than a body width of a user.

The high-pressure narrow-type bottom weighted boat further includes an inflatable bottom supporting plate; and the inflatable bottom supporting plate is disposed on the bottom plate.

The inflatable bottom supporting plate is disposed at a typical bottom draft position.

The high-pressure narrow-type bottom weighted boat further includes a footrest disposed in the bow.

A solution can be added in the footrest, so as to adjust a wight of the footrest.

The high-pressure narrow-type bottom weighted boat further includes a transition segment; and the bow and the middle segment, as well as the middle segment and the stern, are connected through the transition segment.

An end of the transition segment connected to the middle segment is elliptical or quasi-elliptical, and an end of the transition segment connected to the bow or the stern is circular.

Between the bow and the middle segment, the end of the transition segment connected to the middle segment is elliptical or quasi-elliptical, and the end of the transition segment connected to the bow is circular; and alternatively,
between the stern and the middle segment, the end of the transition segment connected to the middle segment is elliptical or quasi-elliptical, and the end of the transition segment connected to the stern is circular.

In response to an inflated and natural stationary state of the high-pressure narrow-type bottom weighted boat, along a direction from the middle segment to the bow, the bow is elevated relative to the bottom plate; and
in response to the inflated and natural stationary state of the high-pressure narrow-type bottom weighted boat, along a direction from the middle segment to the stern, the stern is elevated relative to the bottom plate.

A horizontal plane of an end of the bow away from the middle segment is located above a horizontal plane of an end of the bow close to the middle segment; and
a horizontal plane of an end of the stern away from the middle segment is located above a horizontal plane of an end of the stern close to the middle segment.

The present disclosure provides a use of the high-pressure narrow-type bottom weighted boat.

The high-pressure narrow-type bottom weighted boat is used in flatwater or whitewater.

### DESCRIPTION OF THE DRAWINGS

The present disclosure will be described through examples and with reference to the accompanying drawings. In the drawings:

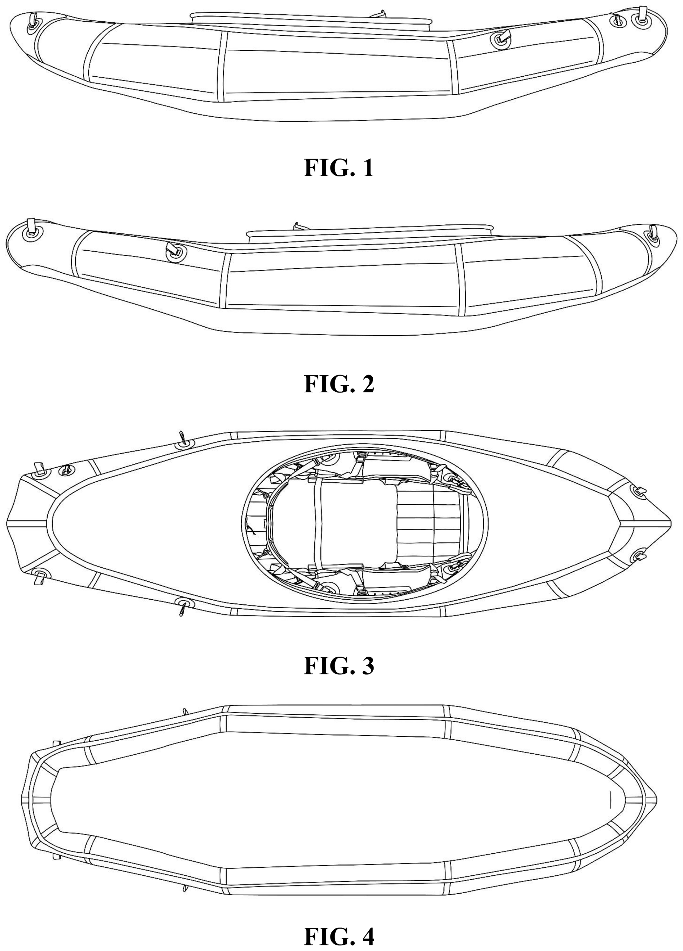

FIG. 1 is a front view of a high-pressure narrow-type bottom weighted boat according to Embodiment 1;
FIG. 2 is a rear view of a high-pressure narrow-type bottom weighted boat according to Embodiment 1;
FIG. 3 is a top view of a high-pressure narrow-type bottom weighted boat according to Embodiment 1;
FIG. 4 is a bottom view of a high-pressure narrow-type bottom weighted boat according to Embodiment 1;

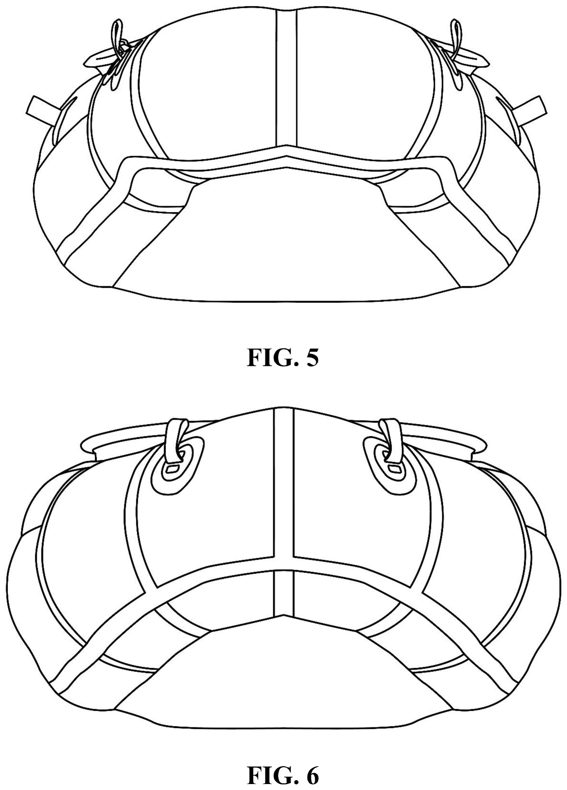

FIG. 5 is a right view of a high-pressure narrow-type bottom weighted boat according to Embodiment 1;
FIG. 6 is a left view of a high-pressure narrow-type bottom weighted boat according to Embodiment 1;

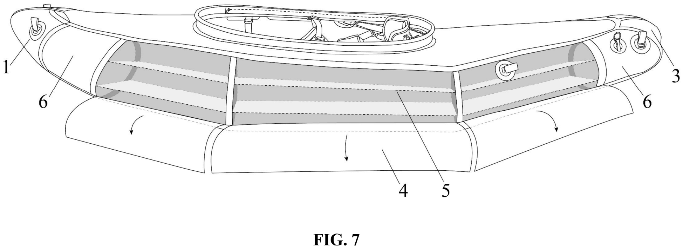

FIG. 7 is a schematic partial expanded view of a high-pressure narrow-type bottom weighted boat according to Embodiment 1;

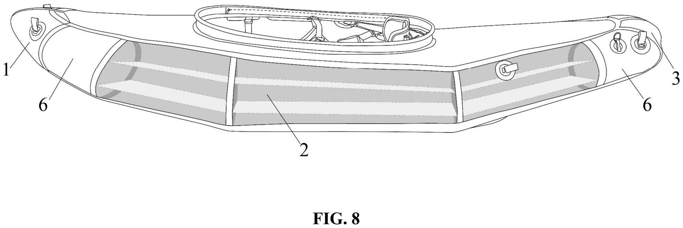

FIG. 8 is a schematic structural view after removal of a first subtube outer wall in FIG. 7;

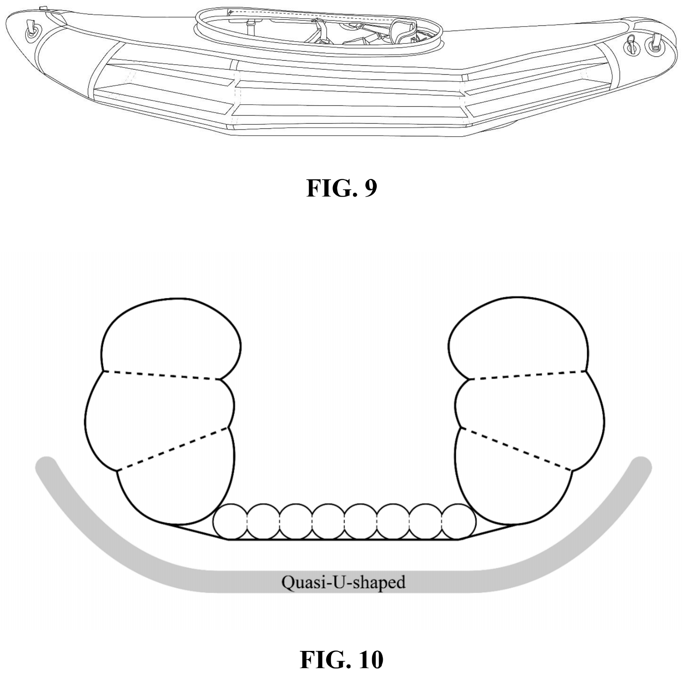

FIG. 9 is a two-dimensional (2D) line diagram of FIG. 8; and
FIG. 10 is a schematic sectional view of a middle segment of a high-pressure narrow-type bottom weighted boat along a vertical direction according to the present disclosure.

Reference numerals: 1: bow, 2: middle segment, 3: stern, 4: first subtube outer wall, 5: first subtube pull strip, and 6: transition segment.

### SPECIFIC IMPLEMENTATIONS

Except contradictory features and/or steps, all features, methods, or steps in a process which are disclosed in this specification can be combined in any manner.

Unless otherwise explicitly specified, any feature disclosed in this specification can be substituted by features with purposes similar to that of the one before or be substituted by equivalent features, that is, unless specifically stated, each feature is just one example of a series of equivalent or similar features.

### Embodiment

Boat stability refers to that a boat is deviated from its initial balanced position under an external moment to cause inclination. The boat has the ability of resisting an external force, and returning to the original balanced state after the external force is removed. During voyage of the boat, in case of interference from various external forces such as wind waves, the balanced state of the boat is destructed. The boat inclines under the external moment. By this time, the boat with proper stability generates a restoring moment under a combined action of buoyancy and gravity, so as to counteract the external moment to prevent continuous inclination. After the external moment is removed, the boat is restored to the original balanced position through the restoring moment (after a certain periodic swing).

At present, concerning the existing packraft, a flat bottom is typically provided, and middle segments of two ends of the packraft are cylindrical. This structure improves static stability of the boat. The existing packraft based on this structure exhibits strong stability in static water areas, and can effectively keep the self-balance without capsizing. This stability is called initial stability or primary stability.

In spite of the high self-stability, the design with the high initial stability suffers poor controllability and poor agility. Usually, paddlers are likely to depend on the stability of the hull, which restricts the paddlers to exhibit their high technical levels.

Meanwhile, the boat with the high initial stability also has own limitations. After the hull reaches a certain inclination in relatively high whitewater waves, the righting moment is reduced suddenly to capsize the boat easily. Hence, importance is attached to the secondary stability of the boat.

The boat with the high initial stability is also righted by the Eskimo roll hardly at a low success rate, and for this, the Eskimo roll is hardly considered as a reliable self-rescue method. Because of the large buoyancy and high initial stability, the torsional resistance of the Eskimo roll is also large. To realize the Eskimo roll of the kayak, the boat designed with high secondary stability and moderate initial stability should be used.

Whitewater is white foams formed by collision of flowing water against rocks. It usually represents a torrent water area. Compared with a static water area, the whitewater features a rapid water flow. Once the existing packraft is capsized in whitewater rafting, the paddler is located in the water flow. By this time, based on the self-stability of the existing packraft, the self-rescue of the user is hardly realized through the Eskimo roll.

As described above, the Eskimo roll is mainly used in the rigid whitewater kayak. Due to features of the rigid whitewater kayak, the Eskimo roll of the rigid whitewater kayak is realized easily. On the other hand, the rigid whitewater kayak cannot be effectively stored for the rigid material, restricting its application range to some extent.

In view of the above problem, as shown in figures, the present disclosure provides a high-pressure narrow-type bottom weighted boat, which is the packraft in essence. However, on the basis of the existing packraft, the present disclosure enables the user to realize the Eskimo roll more easily, effectively expanding the application range of the present disclosure.

The high-pressure narrow-type bottom weighted boat in the embodiment includes an inflatable and deflatable tubular body. The tubular body includes a bow, a middle segment, and a stem. The bow, the middle segment and the stern are connected sequentially. The middle segment includes a bottom plate and two side tubes. The two side tubes are symmetrically disposed at two sides of the bottom plate. The bottom plate and the two side tubes define a central seating area.

In this embodiment, the side tube includes at least two sidewall subtube portions. For the single side tube, the sidewall subtube portions are connected sequentially along a vertical direction to form a whole. A section of the side tube along a direction perpendicular to a central axial direction of the side tube is elliptical or quasi-elliptical A section of each of the sidewall subtube portions is circular, elliptical or quasi-elliptical. A height of the side tube is greater than a width of the side tube. That is, the section of the side tube is in the shape of an ellipse or a quasi-ellipse that is long vertically and narrow at a middle.

In a specific example, the side tube includes three sidewall subtube portions. The side tube includes a first subtube outer wall and two first subtube pull strips. There are two first subtube pull strips. The first subtube pull strips are disposed in the first subtube outer wall. The sidewall subtube portion is formed between the first subtube pull strip and an inner side of the first subtube outer wall, as well as between the two adjacent first subtube pull strips and the inner side of the first subtube outer wall. As shown in the figures, the first subtube pull strips are disposed along the vertical direction to divide the first subtube outer wall into three cavities, namely the three sidewall subtube portions. Based on the first subtube pull strips, the side tube forms a structure with the elliptical or quasi-elliptical section. In this structure, the cylindrical side tube in the existing packraft is changed into the side tube with the elliptical or quasi-elliptical section in the present disclosure.

In the present disclosure, by adjusting a structure and a line shape of the inflatable whitewater kayak, performance similar to that of the rigid whitewater kayak is realized with an inflatable structure. Based on improvement of the above structure, a width of the hull can be reduced. In the present disclosure, pull strips are respectively provided in inflatable gunwales at two sides of the boat (that is, the first subtube pull strip is disposed in the first subtube outer wall). A circular section of the inflatable gunwale is shaped as the ellipse or the quasi-ellipse (a long axis of the ellipse or the quasi-ellipse is disposed along the vertical direction), so as to reduce the width of the hull. This facilitates control on the paddling efficiency and the hull.

Based on the improved structure, the hull in the present disclosure exhibits reduced rolling resistance in the Eskimo roll. According to the prior art, to reduce the buoyancy of the hull, the simplest method is to make the hull small. Nevertheless, this method is not feasible, since the human body cannot be shrunk. In the present disclosure, cylinders at two sides of the gunwale are changed into the quasi-ellipses. While the height is unchanged, the hull is narrower, such that the rolling resistance is reduced in the Eskimo roll.

Meanwhile, a cross section of the middle segment of the improved hull is quasi-U-shaped, effectively improving the secondary stability. As described above, the existing packraft is very stable, namely exhibits desirable primary stability, in static water. However, in case of violent whitewater, after the hull reaches some inclination, the righting moment is reduced suddenly to cause capsizing easily, which is more difficult to realize the Eskimo roll for self-rescue. However, the bottom of the boat in the present disclosure is slightly bent, and is combined with the side tubes at the two sides to form a U shape as a whole. In the present disclosure, the secondary stability of the hull is very excellent, creating a larger control degree of freedom (DOF) to the paddler. Although the stability of the hull mainly depends on the self-balance of the user, a control level of the paddler is further be aroused. This is unachievable for the existing packraft.

Further, the present disclosure can perfect the overall shape of the hull, and ensure the rigidity of the hull. Typically, narrowing the gunwale will affect the rigidity of the hull. In the present disclosure, between the narrow gunwale and the bow, as well as between the narrow gunwale and the stern, the shape is adjusted with the internal pull strip in stages (that is, the first subtube pull strip is disposed in the first subtube outer wall) to realize smooth transition of the shape, and meet requirements of the hull on the streamline and rigidity.

Alternatively, the side tube includes at least two sidewall subtube portions independent of each other. Two adjacent sidewall subtube portions are connected sequentially along the vertical direction by gluing or sewing to form a whole. With this method, the sidewall subtube portions have the circular, elliptical or quasi-elliptical section, and are connected by gluing or sewing to form a whole, thereby forming the side tube. The section of the side tube is elliptical or quasi-elliptical.

The bottom plate is made of a flexible material. An internal width of the central seating area of the hull is slightly greater than a body width of the user, ensuring an enough comfort degree. Meanwhile, the bottom plate of the middle segment and the side tubes at the two sides define the quasi-U-shaped section along the vertical direction. In a specific example, the hull of the central seating area has an external width of about 65-75 cm, preferably 65-70 cm. Further, the high-pressure narrow-type bottom weighted boat further includes an inflatable bottom supporting plate. The inflatable bottom supporting plate is disposed on the bottom (flexible material). By adopting this structure, the cross section of the bottom is made into a U shape in smooth transition. This improves the secondary stability, and improves the roll angle controllability of the paddler.

In the embodiment, the inflatable bottom supporting plate is only disposed at a typical bottom draft position. Meanwhile, a bottom covering skin, rather than the inflatable bottom supporting plate, is disposed at an elevated position of each of the bow and the stern, so as to reduce the weight and maintainability, and expand a space in the boat.

Further, the high-pressure narrow-type bottom weighted boat further includes a transition segment. The bow and the middle segment, as well as the middle segment and the stern, are connected through the transition segment. Specifically, between the bow and the middle segment, an end of the transition segment connected to the middle segment is elliptical or quasi-elliptical, and an end of the transition segment connected to the bow is circular. Between the stern and the middle segment, an end of the transition segment connected to the middle segment is elliptical or quasi-elliptical, and an end of the transition segment connected to the stern is circular.

Further, in response to an inflated and natural stationary state of the high-pressure narrow-type bottom weighted boat, along a direction from the middle segment to the bow, the bow is elevated relative to the bottom plate. That is, a horizontal plane of an end of the bow away from the middle segment is located above a horizontal plane of an end of the bow close to the middle segment. In response to the inflated and natural stationary state of the high-pressure narrow-type bottom weighted boat, along a direction from the middle segment to the stern, the stern is elevated relative to the bottom plate. That is, a horizontal plane of an end of the stern away from the middle segment is located above a horizontal plane of an end of the stern close to the middle segment.

It is to be noted that after the high-pressure narrow-type bottom weighted boat is inflated, both the bow and the stern are elevated relative to the middle segment of the high-pressure narrow-type bottom weighted boat. This is irrelevant with whether the high-pressure narrow-type bottom weighted boat is stationary and in the whitewater. The above assumed natural stationary state is merely for description, rather than limitation. It is to be noted that after the high-pressure narrow-type bottom weighted boat is inflated, the high-pressure narrow-type bottom weighted boat also keeps a relatively fixed shape under the external force. This structure reduces the bow burying, facilitates crossing over waves, meets requirements in whitewater navigation, and improves directional stability.

In the present disclosure, the design in which the bow and the stern are elevated, and the middle segment is structurally improved adjusts the center of gravity, and contributes to implementation of the Eskimo roll. Meanwhile, when crossing over the waves, the structure facilitates elevation of the bow. Further, in the overall structural design, both the bow and the stern are relatively upward, such that the middle segment is immersed in water more deeply to improve the secondary stability.

Further, the high-pressure narrow-type bottom weighted boat further includes a footrest disposed in the bow. Easily available river water can be added in the footrest, so as to adjust a wight of the footrest. The novel whitewater kayak in the present disclosure is very light, such that the overall center of gravity for the boat and the paddler is concentrated to the middle segment, the bow and the stern have the light weight, and the bow has small inertial potential energy. When the bow collides with the whitewater, the bow is susceptible to deflection and thus is controlled hardly. To enhance the stability of the bow, the most ideal approach is to increase the weight at a lower part of the bow. The water is easily available. The present disclosure further includes the footrest disposed in the bow. The footrest can be filled with water, and can be adjusted in volume. This structure not only meets the function of the footrest, but also increases the weight of the bow to accelerate the inertial potential energy of the bow, improving stability of the bow and facilitating control. A proper weight of water can be filled into the footrest through an experiment, adjusting the directional stability of the hull to an easy-to-control interval.

Compared with the existing packraft, the present disclosure has the following advantages:
First of all, the high-pressure narrow-type bottom weighted boat in the present disclosure can reliably realize the Eskimo roll.

According to actual testing results, the inflatable whitewater kayak in the present disclosure can enable the user to realize the Eskimo roll easily in the whitewater for self-rescue, and the technical essentials and success rate are comparable to those of the rigid whitewater kayak and unattainable to the existing packraft.

Then, the inflatable whitewater kayak in the present disclosure can realize performance similar to that of the rigid whitewater kayak, including higher agility from improved power transmission efficiency, and higher roll angle controllability.

Specifically, because of the narrower hull and the more flexible roll angle controllability (specifically, this is typically called the secondary stability in the field of kayak) of the high-pressure narrow-type bottom weighted boat in the present disclosure, the high-pressure narrow-type bottom weighted boat can be controlled flexibly and agilely in the whitewater to reflect the technical level of the user.

Next, the high-pressure narrow-type bottom weighted boat in the present disclosure can be carried flexibly.

The inflatable whitewater kayak in the present disclosure is portable. The whitewater kayak and associated auxiliary equipment can be packaged by a backpack, with a weight less than a half of the weight of the rigid whitewater kayak. The present disclosure can realize more flexible journeys and more diversified tasks, expanding the application range of the packraft.

At last, for beginners who use the high-pressure narrow-type bottom weighted boat in the present disclosure, failure for rolling and ejection from the kayak occur frequently. When this situation occurs in the rigid whitewater kayak, water gets into the hull from a hatchway, and the hull is in a suspended state. By this time, the hull is towed to a bank to pour the water, being very labor-consuming.

However, the inflatable whitewater kayak in the present disclosure still keeps the buoyancy in the water even in case of the ejection and water ingress, such that the paddler can avoid the whitewater through the buoyancy to reach the flatwater position. Meanwhile, the user in the water can climb into the high-pressure narrow-type bottom weighted boat, and rows it to the bank to pour the water, thereby being less labor-consuming. Based on the improved structure, the paddler in the learning stage masters the corresponding rolls more easily.

The present disclosure is not limited to the foregoing specific implementations. The present disclosure extends to any new feature or any new combination disclosed in this specification, and any new method or process step or any new combination disclosed.

## Claims

1. A high-pressure narrow-type bottom weighted boat, comprising: an inflatable and deflatable tubular body, wherein the tubular body comprises a bow (1), a middle segment (2), and a stern (3); the bow (1), the middle segment (2) and the stern (3) are connected sequentially; the middle segment (2) comprises a bottom plate and two side tubes; the two side tubes are symmetrically disposed at two sides of the bottom plate; and the bottom plate and the two side tubes define a central seating area;
the side tube comprises at least two sidewall subtube portions; for the single side tube, the sidewall subtube portions are connected sequentially along a vertical direction to form a whole; and a section of the side tube along a direction perpendicular to a central axial direction of the side tube is elliptical or quasi-elliptical; and
the side tube is combined with the bottom plate; and a section of the middle segment (2) along the vertical direction is quasi-U-shaped.

2. The high-pressure narrow-type bottom weighted boat according to claim 1, wherein the bottom plate is made of a flexible material.

3. The high-pressure narrow-type bottom weighted boat according to claim 1, wherein a section of each of the sidewall subtube portions is circular, elliptical or quasi-elliptical.

4. The high-pressure narrow-type bottom weighted boat according to any one of claims 1 to 3, wherein by disposing a pull strip in the side tube, the side tube is shaped as an ellipse or a quasi-ellipse.

5. The high-pressure narrow-type bottom weighted boat according to claim 4, wherein the side tube comprises a first subtube outer wall (4) and at least one first subtube pull strip (5); the at least one first subtube pull strip (5) is disposed in the first subtube outer wall (4); and the sidewall subtube portion is formed between the first subtube pull strip (5) and an inner side of the first subtube outer wall (4), as well as between two adjacent first subtube pull strips (5) and the inner side of the first subtube outer wall (4); and alternatively,
the side tube comprises at least two sidewall subtube portions independent of each other; and two adjacent sidewall subtube portions are connected sequentially along the vertical direction by gluing or sewing to form a whole.

6. The high-pressure narrow-type bottom weighted boat according to claim 1, further comprising an inflatable bottom supporting plate, wherein the inflatable bottom supporting plate is disposed on the bottom plate.

7. The high-pressure narrow-type bottom weighted boat according to claim 1, further comprising a footrest disposed in the bow (1).

8. The high-pressure narrow-type bottom weighted boat according to any one of claims 1 to 7, further comprising a transition segment (6), wherein the bow (1) and the middle segment (2), as well as the middle segment (2) and the stern (3), are connected through the transition segment (6).

9. The high-pressure narrow-type bottom weighted boat according to claim 8, wherein an end of the transition segment (6) connected to the middle segment (2) is elliptical or quasi-elliptical, and an end of the transition segment (6) connected to the bow (1) or the stern (3) is circular.

10. The high-pressure narrow-type bottom weighted boat according to any one of claims 1 to 9, wherein in response to an inflated and natural stationary state of the high-pressure narrow-type bottom weighted boat, along a direction from the middle segment (2) to the bow (1), the bow (1) is elevated relative to the bottom plate; and
in response to the inflated and natural stationary state of the high-pressure narrow-type bottom weighted boat, along a direction from the middle segment (2) to the stern (3), the stern (3) is elevated relative to the bottom plate.
